(19)

Europäisches
Patentamt
European
Patent Office
Office européen
des brevets

(11) **EP 2 199 749 A1**

(12) **EUROPEAN PATENT APPLICATION**

(43) Date of publication:
**23.06.2010 Bulletin 2010/25**

(51) Int Cl.:
***G01D 3/02*** *(2006.01)*

(21) Application number: **08106010.5**

(22) Date of filing: **17.12.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(71) Applicant: **Robert Bosch GmbH**
**70442 Stuttgart (DE)**

(72) Inventors:
• **Grossmann, Alex**
**71229 Leonberg (DE)**
• **Hallor, Mattias**
**71706 Markgroeningen (DE)**

(54) **Method and device to determine the relative position of a rotational mechanical element**

(57)     A Method and device to determine the relative position of a rotational mechanical element based on the positional signal of a rotational sensing unit attached to the mechanical element is proposed. The positional signal depends of the rotational position of the sensing unit.

By operating the mechanical element at a known position and measuring the positional signal of the sensing unit a reference position is determined. The relative position is calculated by using the values of the sensing unit at the reference position, the actual position and a stroke of the mechanical element.

Fig 2

**Description**

Background of the invention

The invention relates to a method and a device for determining the relative position of rotatable mechanical elements especially in a motor vehicle, according to the preamble of the independent claims. The patent US5,229,957 discloses a method of tolerance compensation wherein the relative position of a pedal in a motor vehicle is determined based on prestored reference valves and a positional signal emitted by a potentiometer. The prestored reference valves correspond to the no load condition and full load condition of the pedal, the processed signal is received by the electronic control unit to regulate the pedal.

Advantages of the invention

The method and the device according to the independent patent claims have the advantage that the determination of the relative position of the mechanical elements is performed automatically based on the positional signals read from the sensing unit. The method is highly simplified since the relative position is determined without using any prestored values as reference values for further calculation. The invention does not require the need for accurate alignment of the sensing unit to the mechanical element. The sensing element is neither aligned during mounting nor programmed after mounting on the mechanical element.

Further improvement and advantages are realised by the features of the dependent patent claims. The invention also involves a reporting of fault to the operator if the mechanical elements are not in the permissible range. The reported error enables the operator to take immediate steps to overcome the error such as defects in the manufacture or the installation when the system is first put into operation, during initialisation.

The identification of the stroke being done during the initialisation enables accurate calculation of relative position of mechanical element, and does not require the need for accurate alignment of sensing unit and the mechanical element.

The invention is highly effective also in conditions where the positional signal at identified first position is greater than the positional signal at a defined second position of the mechanical element. The installation time of the sensing unit to the mechanical elements is shortened. The manufacturing process is simplified and the overall cost of mass manufacturing is also reduced. The normalization of the positional signals is simplified.

The sensing unit used in the present invention can be a digital sensing unit but does not exclude other sensing units that are capable of measuring rotational movement of the mechanical unit.

Brief description of the drawings

Examples of the invention are shown in the drawings and described in detail in the following description:

Fig 1    shows a circuit arrangement according to the invention,

Fig 2    shows the signals of the sensing unit and the corresponding positions of the mechanical element for two different alignments of the sensing unit and the mechanical element.

Description of the preferred embodiments

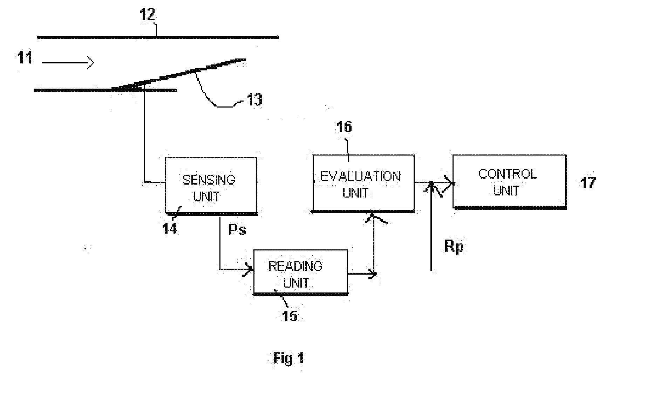

Fig 1: shows a circuit arrangement according to the present invention, an intake port 11 of an air flow path 12 has a swirl flap13. The air flows across the swirl flap 13 as it enter the cylinder. The swirl flap is rotated in order to provide a swirling effect in the air fuel mixture in the cylinder, to improve the combustion. A sensing unit 14 which is a digital sensing unit is mechanically linked to the swirl flap 13, to detect the position of the swirl flap when the flap is actuated. The position signal Ps of the sensing unit is read by a reading unit 15. The signal read by the reading unit 15 is sent to an evaluation unit 16. The output of the evaluation unit is sent to a control unit 17 which is an electronic control unit.

Sometimes the air mixture that enters a cylinder of an internal combustion engine is not properly mixed with the fuel supplied and therefore the air fuel ratio is maintained uniformly. In order to improve the mixing of the air and fuel a swirl flap is introduced in the intake port. The actuation of the swirl flap generates a vortex in the flow of mixture of air and fuel. The turbulence created in the mixture of air and fuel by the actuation of the swirl flap enables efficient mixing of the air and fuel before in the cylinder of an internal combustion engine. The swirl flap is a rotatable mechanical element. The mechanical element can be any rotatable mechanical element such as a swirl flaps or throttle valve or any general purpose actuator (GPA). On operating, the mechanical elements are rotatable in a permissible angle range. The advent of electronic controlling of mechanical elements such as swirl flap has increased the accuracy of regulating the mechanical elements as desired. A sensing unit, generally a rotational positional sensor, is coupled to the mechanical elements. The alignment of the sensing unit with that of the mechanical element plays an important role in detecting the position of the mechanical elements to determine and to regulate the movement of the mechanical elements. Generally the alignment or programming of the sensing unit to the mechanical element is laborious and time consuming. A slight misalignment will to lead to incorrect calculation of position of the mechanical element leading to faulty regulation of the mechanical elements by the electronic control unit. Therefore the aim of the present invention is to provide a method and device that enables calculation of relative position of the mechanical element without the need for any prior programming of the sensing unit.

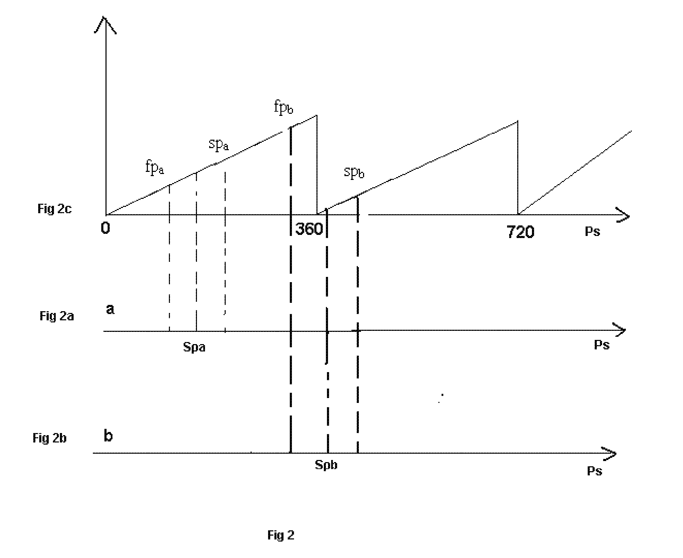

Fig. 2 shows the signals of the sensing unit and the corresponding position of the mechanical element for two different alignments of the sensing unit and the mechanical element. The mechanical element is rotatable within a maximum possible rotational angle range, for example 90°. Fig. 2c shows the signal of the sensing unit when the sensing unit is rotated from 0° to 360° and further from 360° to 720° and so on. The positional signal varies between a minimum value that is here the value = 0 and a maximum value (for an n bit sensor the value $2^n - 1$). The signal of the sensing unit can be a digital signal or an analogue signal. Generally the positional signals of the sensing unit increases between 0° to 360°. Since there is no predetermined alignment of the mechanical element and the sensing unit the range of the mechanical element can be situated so that it crosses the maximum value of the sensing unit at 360°. In this case the output of the sensing unit drops from the maximum value at 360° to the minimum value just above 360° and then rises again. The invention considers this behaviour and uses an evaluation algorithm which supplies a proper value of the rotation of the mechanical element, without the necessity to arrange the mechanical element in a predetermined position relative to the sensing unit. Further it is possible to use the same sensing unit for mechanical elements with vary in the possible range of rotation between the different mechanical elements. So the sensing unit can be used for different mechanical elements without knowing the possible range of the mechanical elements in advance. This is achieved by a measurement of the minimum and maximum rotational position of the mechanical element and storing the measured output of the sensing unit. If the possible range of the mechanical element is known in advance this predetermined range of the mechanical element can be used and no initial measurement is necessary.

During fabrication the invention is used when the alignment of the sensing unit and the mechanical element is unclear. Fig 2a and 2b shows the situation for two different alignments occurring during the assembly of the mechanical element and the sensing unit.

Fig. 2a shows the alignment of mechanical unit and sensing unit occurring during the assembly of sensing unit and mechanical element during fabrication , wherein the sensing unit is aligned or oriented to the mechanical elements such that the positional signals emitted by the sensing unit is $fp_a$ at first position for example: when the Swirl flap is not in active condition and $sp_a$ at second position of the mechanical elements for example when the swirl flap is in active mode to provide a swirling effect to the air flowing into the cylinder of an internal combustion engine.

For the further calculation a stroke of the sensing element has to be determined. The stroke is the difference of the difference of the sensing unit at the minimum and maximum rotational position of the mechanical element. The stroke can by calculated based on the positional signals $fp_a$, $sp_a$ corresponding to the first position (minimum) and the second position (maximum) of the mechanical element. The second position $sp_a$ can either be calculated based on positional signal measured at the second position or by the defined maximal permissible rotational range of the mechanical element. The difference r (as mentioned in the calculation below) between the positional signals $sp_a$ at second defined position of the mechanical element and $fp_a$ at a second position of a mechanical element is compared to that of the negative of the half of the maximum possible range of the sensing unit ($r < - 2^{n-1}$). According to the fig 2a, the positional signal emitted by the sensing unit is such that the calculated difference r is not less than the negative of the half of the maximum possible range of the sensing unit and the calculated difference is assigned to be the stroke. As for the alignment of the mechanical element and the sensing unit as shown in Fig 2a, the calculation of stroke is performed by using simple steps as the output of the sensing unit is linearly increasing without any jump from maximum valve to minimum value of the sensing unit.

Further a difference p between the actual positional signal $S\rho a$ and the positional signal $fp_a$ at first defined position is calculated. According to the positional signals as shown in fig.2a the calculated difference p is neither greater than the half of the maximum possible range of the sensing unit nor less than the negative of the maximum possible range of the sensing unit value (for an n bit sensor the value $2^n - 1$). Therefore the calculated difference p is assigned as the normalized signal $S_{norm}$. Hence relative position of the mechanical element according to the alignment of the sensing unit with that of the mechanical element as show in fig.2a, is determined based on the calculated stroke and the normalized signal. The present invention enables to determine the accurate relative position of the mechanical element without requiring the need of any prestored values as reference values.

The determination of the stroke of a mechanical element having a digital sensor unit with a resolution of n bits by measurement of the minimum and maximum position uses the following calculation steps:

$$r = sp_a - fp_a$$

$$\text{If } (r < -2^{n-1})$$

$$\text{stroke} = r + 2^n$$

Else

$$\text{stroke} = r$$

The condition $r < -2^{n-1}$ is satisfied in situation as shown in fig.2b. All other conditions is in situations as shown in fig 2a.

Further it is possible that the stroke has not to be determined by a measurement of the mechanical element but is known in advance but the relative positioning of the sensor relative to the rotatable mechanical element is unknown. This is the case if the rotational movement of the mechanical element is limited by mechanical stopping elements, so that only a limited range of angles can be realised. In this case only the following part of the calculation is needed since the stroke is known and there is no need to measure the stroke.

The stroke is used to calculate the relative position of a measured value Spa using the following calculation steps:

$$\rho = (S\rho a - fp_a)$$

$$\text{If } (\rho > 2^{n-1})$$

$$S_{norm} = \rho - 2^n$$

Else

$$\text{If } (\rho < -2^{n-1})$$

$$S_{norm} = \rho + 2^n$$

Else

$$S_{norm} = \rho$$

$$P_{rel} = S_{norm}/\text{stroke}$$

(the relative position (angle) can also be calculated with reference to the whole value range (360°), the calculation would then be $P_{ang} = S_{norm}/2^n * 360°$)

In this calculation the normalized measurement value $S_{norm}$ is used as intermediate step. This normalized measurement value is a value that is relative to a known reference position of the mechanical element, in this example the minimal position of the mechanical element. It is also possible that the normalized measurement value is relative to a reference position which is the maximum position of the mechanical element or any other known position of the mechanical element (but then the calculation becomes more complex). Further the normalized measurement value is shifted to adapt to different alignments of the mechanical element and the sensing element by adding or subtraction a full range of the sensing element. By this the jump from the maximal signal of the sensing element to the minimal signal of the sensing element when crossing 360° as shown in figure 2 is transformed into a shifted signal having a value between $-2^{n-1}$ and $+2^{n-1}$. By this $S_{norm}$ avoids the discontinuity of the jump at 360°. By comparing (dividing) $S_{norm}$ to the stroke the relative position is calculated.

The present invention involves reporting the operator an error signal if the calculated difference between the first defined position and the second defined position of the rotatable mechanical element is greater than the half of the maximum possible range of the sensing unit or the difference lies between the negative of the half of the maximum possible range of the sensing unit and zero. According to figure 2a, it is required that the positional signal $sp_a$ lies within half a turn clockwise from the positional signal $fp_a$.

Fig 2b further shows an alignment occurring during the assembly of a sensing unit and mechanical element during fabrication, wherein the sensing unit is aligned or oriented to the mechanical elements such that the positional signals emitted by the sensing unit is nlb at no load condition and fib at full load condition of the mechanical elements, corresponding to the closed condition and open condition of the throttle valve. In this arrangement, when the mechanical element is rotated the positional signal jumps from the maximum value to zero. An alignment as described above might lead to a faulty calculation of the relative position of the rotatable mechanical element, but this invention provides a unique method of determining the relative position of the mechanical element even in situation as described above. In order to determine the stroke of the mechanical elements from open condition to the closed condition, the difference r between the positional signals at a first position $fp_b$ and at a second position $sp_b$ of the mechanical element is compared to that of the negative of the half of the maximum possible range of the sensing unit. According to the alignment of the sensing unit and the mechanical element as show in fig. 2b, the calculated difference r is less, therefore the said difference is added to the maximum possible range of the sensing unit, in order to transform the signals to a possible range of calculation. The transformed value is assigned as the stroke.

Further the difference p between an actual positional signal $Sp_b$ of the sensing unit and the positional signal nlb at no load condition of the mechanical element is calculated. According to the alignment of the sensing unit and the mechanical element as show in fig. 2b, the calculated difference $\rho$ according to this embodiment is less than that of the negative of the half of the maximum possible range of the sensing unit. Therefore the calculated difference is added to the maximum possible range of the sensing unit. The transformed valve is assigned as the normalized signal $S_{norm}$. Hence relative position ($P_{rel}$) of the mechanical element that is rotatable in a permissible angle range is determined based on the calculated stroke and the normalized signal $S_{norm}$. If the calculated relative position is outside the permissible range a fault is reported.

The above situation of arrangement of the sensing unit and the mechanical element is further described by means the following example (according to fig 2b):

n=14 (number of bits for the raw value from the sensing unit)

$$fp_b = 14000$$

$$sp_b = 4000$$

$$S\rho_b = 2500$$

$$r = 4000-14000 = -10000 \ (<-2^{13})$$

Therefore stroke=-10000+16384=6384

$$\rho = 2500-14000 = -11500 \ (<-2^{13})$$

$$S_{norm} = -11500 + 16384 = 4884$$

$$P_{rel} = S_{norm}/stroke = 4884/6384 = 0.765$$

(corresponds to 76.5 % opening) (Alternatively the relative angle calculated with reference to the whole value range (360°)

$$P_{ang} = S_{norm}/2^n * 360° = 4884/16384*360° = 107°)$$

The present invention enables to determine the relative position of the mechanical element even in conditions where the sensing element is oriented to the mechanical element such that the positional signal at no load condition of the mechanical element is greater than then the positional signal at full load condition of the mechanical element. The laborious task involved in the alignment of the sensing unit to the mechanical element is reduced. As the result the present invention provides a simple, cost effective, reliable method and device to determine the relative position of rotational mechanical elements such as throttle valves, swirl flap or other rotatable elements which are preferably used in an automotive vehicle.

**Claims**

1.    Method to determine the relative position of a rotational mechanical element based on the positional signal of a rotational sensing unit attached to the mechanical element, the positional signal being dependent of the rotational position of the sensing unit,
measure a reference position, by operating the mechanical element at a known position and measure the positional signal of the sensing unit,
measure a actual position signal of the sensing unit,
and calculate the relative position using the values of the sensing unit at the reference position and the actual position and a stroke of the mechanical element.

2.    Method of claim 1, the stroke is a predefined value, i.e. the maximum permissible rotational range of the mechanical element.

3.    Method of claim 1, the stroke is identified by the positional signal measured at a minimal position and a positional signal measured at a maximal position of the mechanical element.

4.    Method of claim 3 **characterized in that** the stroke is compared to a permissible range for the stroke and if the stroke is outside the permissible range a fault is reported.

5.    Method of claim 1 **characterized in that** the relative position is compared to a permissible range for the relative position and if the relative position is outside the permissible range a fault is reported.

6.    Method of claim 1 **characterized in that** the step of determining the stroke is performed in an initialisation process after the sensing unit is attached to the mechanical element.

7.    Method of any of the above claims, **characterized in that**, the positional signal supplied by the sensing unit lies between a minimum signal and a maximum signal, the signal of the sensing unit discontinuously jumps between the maximum and the minimum signal if the sensing unit is rotated into the rotational positions of the maximum and minimum signal, the calculation of the relative position uses a normalization by shifting the measured signals at the maximum and/or the minimum signal.

8.    Method of claim 7 **characterized in that**, the step of normalisation is performed by calculating the difference between the actual positional signal and the reference positional signal, if the difference is smaller than the neg. value of the half of the maximum positional signal the positional signal is normalised by adding the maximal positional signal, and if the difference is not smaller than the neg. value of the half of the maximum positional signal the positional signal is normalised by being the difference between the actual positional signal and the reference positional signal.

9. Method of any of the upper claims, the sensing unit supplying a digital signal.

10. Device to determine the relative position of a rotational mechanical element based on the positional signals of a rotational sensing unit attached to the mechanical element, the positional signals being dependent of the rotational position of the sensing element,
comprising means to measure a reference position, by operating the mechanical element at a known position and measure the positional signal of the sensing unit, comprising means to measure a actual position signal of the sensing unit,
and comprising means to calculate the relative position using the values of the sensing unit at the reference position and the actual position and a stroke of the mechanical element.

11 →

12

13

14 SENSING UNIT

Ps

15 READING UNIT

16 EVALUATION UNIT

17 CONTROL UNIT

Rp

Fig 1

Fig 2c

fp_b

sp_a

fp_a

0   360   720   Ps

Fig 2a   a

Spa

Fig 2b   b

Spb

sp_b

Fig 2

Europäisches
Patentamt

European
Patent Office

Office européen
des brevets

# EUROPEAN SEARCH REPORT

**Application Number**

EP 08 10 6010

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 952 944 B1 (WARD CHARLES E [US]) 11 October 2005 (2005-10-11) * column 2, line 19 - line 29; claims 1,5; figures 2,3,4a,4b * * column 3, line 24 - column 4, line 61 * ----- | 1-10 | INV. G01D3/02 |
| X | EP 0 530 176 A (RSF ELEKTRONIK GMBH [AT]) 3 March 1993 (1993-03-03) * column 9, line 50 - column 10, line 6 * ----- | 1,10 | |

**TECHNICAL FIELDS SEARCHED (IPC)**

G01D

The present search report has been drawn up for all claims

| Place of search | Date of completion of the search | Examiner |
|---|---|---|
| Munich | 25 June 2009 | Faber-Jurk, Sonja |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

**ANNEX TO THE EUROPEAN SEARCH REPORT
ON EUROPEAN PATENT APPLICATION NO.**

EP 08 10 6010

This annex lists the patent family members relating to the patent documents cited in  the above-mentioned European search report.
The members are as contained in the European Patent Office EDP file on
The European Patent Office is in no way liable for these particulars which are merely given for the purpose of information.

25-06-2009

| Patent document cited in search report | | Publication date | Patent family member(s) | | Publication date |
|---|---|---|---|---|---|
| US 6952944 | B1 | 11-10-2005 | NONE | | |
| EP 0530176 | A | 03-03-1993 | AT | 143490 T | 15-10-1996 |
| | | | DE | 59207233 D1 | 31-10-1996 |
| | | | US | 5294793 A | 15-03-1994 |

EPO FORM P0459

For more details about this annex : see Official Journal of the European Patent Office, No. 12/82

**REFERENCES CITED IN THE DESCRIPTION**

**Patent documents cited in the description**

- US 5229957 A